# EUROPEAN PATENT APPLICATION

(11) **EP 4 589 134 A1**
(43) Date of publication of application: **23.07.2025**
(21) Application number: 25153381.6
(22) Date of filing: 22.01.2025
(51) Int. Cl.: F02C 9/00, F02C 9/28, G06F 1/20, G06F 1/324, G06F 1/3234, G06F 1/3287, G06F 1/329, G06F 9/48, G06F 9/50

(54) **MODULAR FADEC THERMAL MANAGEMENT**

(30) Priority: 22.01.2024 US 202418418618
(71) Applicant: RTX Corporation, Farmington, CT 06032 (US)
(72) Inventor: PATRICK III, John, 06032, Farmington (US); SCHEID, Paul, 06032, Farmington (US); LAMBERTI, William, 06032, Farmington (US); POSNIAK, Jason, 06032, Farmington (US); ADAMSKI, Paul, 06032, Farmington (US)
(74) Representative: Dehns

(57) **Abstract**

A method includes operating a gas turbine engine (20; 91) associated with an aircraft (90) with a full authority digital electronic controller ("FADEC") (100) including operating systems that are critical to operation of the gas turbine engine (20; 91) for the aircraft (90), and systems that are less critical. The temperature is monitored in the FADEC (100), and operation of the non-critical functions is reduced based upon the temperature of the FADEC (100) approaching a limit (171). An assembly (90) and a gas turbine engine (20; 91) are also disclosed.

## Description

### TECHNICAL FIELD

This application relates to a method of thermal management for a gas turbine engine FADEC.

### BACKGROUND OF THE INVENTION

Gas turbine engines are known, and are being provided with increasingly complex controls. Historically, a full authority digital electronic controller ("FADEC") has controlled the operation of a gas turbine engine. More recently modular FADECs have been utilized.

During operation, particularly at high power of the associated aircraft, the FADEC may generate undesirably high temperatures. In the past, the only control option would be to reduce the overall operation of the FADEC. Since the FADEC is typically performing critical functions, especially at high engine power, this has not always been possible.

### SUMMARY OF THE INVENTION

In an aspect of the present invention, a method includes operating a gas turbine engine associated with an aircraft with a full authority digital electronic controller ("FADEC") including operating systems that are critical to operation of the gas turbine engine for the aircraft, and systems that are less critical. The temperature is monitored in the FADEC, and operation of the non-critical functions reduced based upon the temperature of the FADEC approaching a limit.

In an embodiment of the above, the method includes monitoring a sensed temperature to perform the monitoring step.

In another embodiment according to any of the previous embodiments, the method includes assuming the temperature might be approaching the limit under certain conditions.

In another embodiment according to any of the previous embodiments, a processor within the FADEC includes a plurality of cores, with at least one of the cores being utilized to perform the non-critical functions, and the at least one of the cores being the one controlled to reduce operation of the non-critical functions.

In another embodiment according to any of the previous embodiments, the non-critical functions include environmental functions and health functions.

In another embodiment according to any of the previous embodiments, the reduction of the non-critical functions includes turning off the non-critical functions.

In another embodiment according to any of the previous embodiments, the reduction of the non-critical function includes reducing a clock frequency for the non-critical function to reduce the generated heat.

In another aspect of the present invention, an assembly includes a full authority digital electronic controller ("FADEC") having embedded processing circuitry operable to operate a gas turbine engine associated with an aircraft including operating systems that are critical to operation of the gas turbine engine for the aircraft, and systems that are less critical. The embedded processing circuitry is also operable to monitor the temperatures in the FADEC, and reduce operation of the non-critical functions based on the temperature of the FADEC approaching a limit.

In an embodiment of the above, the embedded processing circuitry is operable to monitor sensed temperatures to perform the monitoring step.

In another embodiment according to any of the previous embodiments, the embedded processing circuitry is operable to assume the temperature might be approaching the limit under certain conditions.

In another embodiment according to any of the previous embodiments, a processor within the full authority digital electronic controller includes a plurality of cores, with at least one of the cores being utilized to perform the non-critical functions, and the at least one of the cores being the one controlled to reduce operation of the non-critical functions.

In another embodiment according to any of the previous embodiments, the non-critical functions include environmental functions and health functions.

In another embodiment according to any of the previous embodiments, the reduction of the non-critical functions includes turning off the non-critical functions.

In another embodiment according to any of the previous embodiments, the reduction of the non-critical function includes reducing a clock frequency for the non-critical function to reduce the generated heat.

In another aspect of the present invention, a gas turbine engine includes a compressor, combustor and a turbine. A full authority digital electronic controller ("FADEC") has embedded processing circuitry operable to operate a gas turbine engine associated with an aircraft including operating systems that are critical to operation of the gas turbine engine for the aircraft, and systems that are less critical. The embedded processing circuitry is also operable to monitor the temperatures in the FADEC, and reduce operation of the non-critical functions based on temperature of the FADEC approaching a limit.

In an embodiment of the above, the embedded processing circuitry is operable to monitor sensed temperatures to perform the monitoring step.

In another embodiment according to any of the previous embodiments, the embedded processing circuitry is operable to assume the temperature might be approaching the limit under certain conditions.

In another embodiment according to any of the previous embodiments, the non-critical functions include environmental functions and health functions.

In another embodiment according to any of the previous embodiments, the reduction of the non-critical functions includes turning off the non-critical functions.

In another embodiment according to any of the previous embodiments, the reduction of the non-critical function includes reducing a clock frequency for the non-critical function to reduce the generated heat.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A schematically shows a gas turbine engine and associated controls.
Figure 2B schematically shows a FADEC which is part of the Figure 2A system.
Figure 3 is a graphic representation of a system on a chip.
Figure 4 shows a control assembly including a modular FADEC.
Figure 5 shows a series of operational regimes.
Figure 6A shows a challenge with temperatures on a FADEC, and adjustments under a method according to this disclosure.
Figure 6B is a flow chart for a method according to this disclosure.

### DETAILED DESCRIPTION

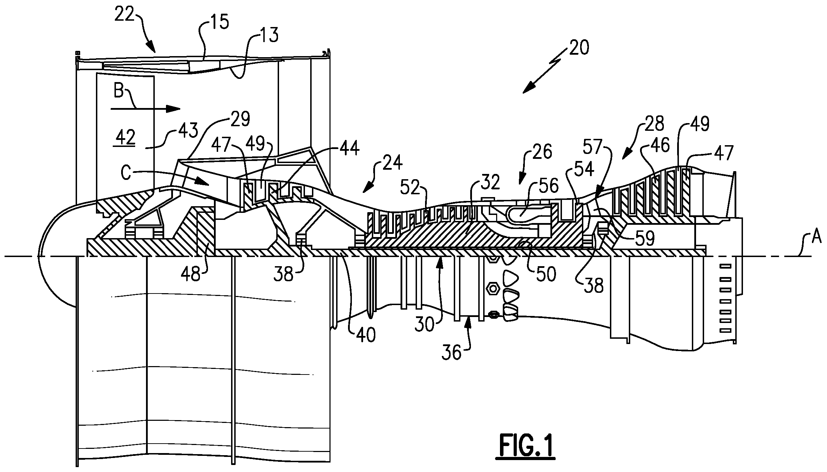

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F, or more narrowly less than or equal to 3500.0 °F, such as between 2750.0 °F and 3350.0 °F. The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F, or more narrowly greater than or equal to 800.0 °F, such as between 900.0 °F and 975.0 °F. The relatively low EGT can be utilized in combination with the other techniques disclosed herein to reduce fuel consumption.

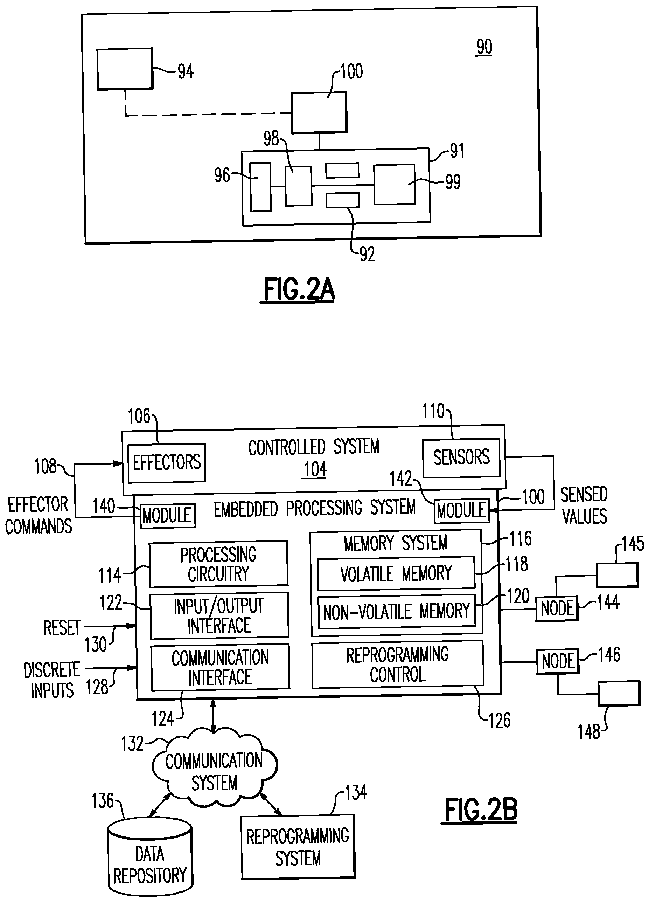

Figure 2A schematically shows an assembly 90. In a disclosed embodiment assembly 90 may be an aircraft. A gas turbine engine 91 is shown as associated with the aircraft 90. Gas turbine engine 91 has a fan 96, a compressor section 98, a combustor section 97 and a turbine section 99. It should be understood that this is a highly schematic description. While a gas turbine engine and aircraft are disclosed as the assemblies and the associated control, other assemblies and controls may benefit from this disclosure.

As shown, a FADEC 100 for engine 91 communicates with a control 94 on the aircraft 90.

Figure 2B shows details of a system including the FADEC 100 and the controlled system 104. Here, the controlled system 104 may include systems on the gas turbine engine 91 of Figure 2A.

The Figure 2B system includes the FADEC 100 and a controlled system. The controlled system 104 can be any type of physical system that includes one or more effectors 106 controlled by one or more effector commands 108. The effector commands 108 are received from a module 140 associated with the FADEC 100.

Examples of effectors can include one or more motors, solenoids, valves, relays, pumps, heaters and/or other such actuation control components.

A plurality of sensors 110 can capture state data associated with the controlled system 104 and provide sensed values 112 as feedback to a module 142 in the FADEC 100 to enable closed-loop control of the controlled system 104 according to one or more control laws.

Examples of the sensors can include one or more temperature sensors, pressure sensors, strain gauges, level sensors, accelerometers, rate sensors, and the like.

In the Figure 2B example, the FADEC 100 includes processing circuitry 114 and a memory system 116 configured to store a plurality of configuration items, where at least one of the configuration items includes a sequence of computer executable instructions for execution by the processing circuitry 114. Types of configuration items can include data, such as constants, configurable data, and/or fault data. Examples of computer executable instructions can include software, operating system software, and/or application software. The executable instructions can be stored or organized in any manner and at any level of abstraction, such as in connection with controlling and/or monitoring operation of the controlled system 104. The processing circuitry can be any type or combination of central processing unit ("CPU"), including one or more of: a microprocessor, a digital signal processor, a microcontroller, an application specific integrated circuit, a field programmable gate array, or the like.

In embodiments, the memory system may include volatile memory 118 such as random access memory, and non-volatile memory 120, such as flash memory, read only memory, and/or other electronic, optical, magnetic, or any other computer readable medium onto which is stored data and algorithms in a non-transitory form.

The FADEC 100 can also include one or more of an input/output interface 122, a communication interface 124, a reprogramming control 126, and/or other elements.

The input/output interface 122 can include support circuitry for interfacing with the effectors 106 and sensors 110, such as filters, amplifiers, digital-to-analog converters, analog-to-digital converters, and other such circuits to support digital and/or analog interfaces. Further, the input/output interface 122 can receive or output signals to/from other sources. As one example, discrete inputs 128 can be input to the input/output interface to establish an operating mode of the FADEC, or to trigger actions by the FADEC 100.

A reset signal 130 may also be internally induced as a result of a loss of power detected by power conditioning circuitry, and by specific hardware or software direction. The communication interface 124 can be coupled to a communication system 132, which can include one or more direct or network communication links to systems such as a reprogramming system 134, a data repository 136, or another system. The communication system 132 may also communicate with the control 94 on the associated aircraft 90.

The reprogramming system 134 can be any type of computer system operable to load new/updated configuration items to the FADEC 100 for storage in the memory system 116. The reprogramming system 134 can interface to the communication system 132 to a wired, wireless, optical, or magnetic coupling. The data repository 136 can serve as a data source for updating the memory system 116, for instance, with control system data, or as a data sync to offload and clear data from the memory systems, such as fault data, history data, and the like.

As also shown, systems 145 and 148 may have control nodes 144 and 146 that communicate to the FADEC 100. As an example, the system 145 may be an anti-ice system.

Other examples of modules or nodes may include additional wired or wireless communication interfaces or input/output devices that are remote to optimize environmental considerations such as envelope, weight, thermal, and/or power.

In general, a module is a control system that is within the FADEC 100, whereas a node is outside, but communicating with it.

The inclusion of a multi-core system on a chip ("SoC") in a FADEC introduces new levels of processing capability that could potentially be hindered due to engine thermal constraints. To help avoid any thermal issues, power management is used to control processor and individual core activity.

Certain systems provide the ability to control the power and performance states of three major SoC processing systems: application processing unit (APU), real-time processing unit (RPU), and the platform management unit (PMU). A multi core processor (say four core), along with the DDR memory controller, GPU, and high-performance peripherals including PCI Express, USB 3.0, DisplayPort, and SATA, provides a full-power domain. Another multi core processor (say two core), tightly coupled memories, On-Chip Memory, PMU, configuration and security unit (CSU), and the low-speed peripherals provide a low power domain. Logic cells, block RAMs, DSP blocks, XADC, I/Os, and high-speed serial interfaces provide a programmable logic power domain. Within the full-power domain, each of the cores is treated as its own "power island" and can therefore be managed individually based on the processes running on each core. This separation of individual cores into power islands is particularly useful for cores partitioned by a secure hypervisor so that both bare-metal applications and guest OS's can be run simultaneously.

This disclosure continuously monitors the temperatures of three power domains using integrated temperature sensors to determine when thermal thresholds are being approached. When the system starts to reach its upper thermal limits due to sustained engine operation, or when the engine control looks to minimize thermal output of the FADEC based on other engine/aircraft parameters, the control system software attempts to minimize processing unit activity using methods such as core de-activation, core idling, clock gating, or frequency scaling. The separation of the plural cores in each processor facilitates this control. Additionally, the control system monitors active processes and core activity to determine the most effective application of these power saving methodologies.

The implementation of the power management system can therefore be designed as a state machine, where core and power unit activity are based on a combination of aircraft/engine parameters, temperature values, and software defined state transition triggers. A normal operating state is defined in which all cores are active and also define specific trigger logic and a series of alternate power-saving states that are activated when the trigger logic is met.

A system from Xilink, known as Ultrascale+ MPSOC, may be used.

Including such a power management system in the FADEC allows one to better mitigate thermal limits of the SoC while operating in a high temperature environment. By utilizing the thermal mitigation techniques disclosed herein, the power management system prevents the rapid reduction of componentry within the FADEC. The overall life of the FADEC is extended and unwanted removals due to hardware related thermal damage are avoided. Additionally, by constantly monitoring the thermal state of the FADEC by the hypervisor and integrated temperature sensors, one is able to better predict when operational behavior of the componentry begins to reduce and better predict the need for future maintenance.

A benefit of this technology is most apparent when aircraft/engines are operating in harsh thermal environments such as high pollution, sand and/or high temperature areas. While aircraft are taxiing, taking off, or shutting down on hot days, there is potential for environmental conditions to push the FADEC either into or past thermal safety margins. The FADEC is already extracting parameters such as core temperature, flight phase, ambient pressure, engine temperature, and throttle lever angle from ARINC data busses, I/O boards, PHM boards, and SoC temp sensors. This information could be passed to the control processor to determine when the thermal safety margins are being approached. When the control processor deems it necessary to limit FADEC/SoC activity based on these parameters, a signal may be sent to a Prognostic Health Management (PHM) board to, say, perform frequency scaling, thus reducing core clock frequencies for cores that are running non-safety-critical functions. An example of non-critical functions may be related to onboard data analysis. If additional power should be saved to reduce heat, the control processor could notify the PHM board to shut down peripherals such as the SoC's Graphical Processing Unit (GPU) or proposed neural processing unit.

Say an aircraft is scheduled to take off on a hot summer day. While on the ground, the FADEC can operate within its thermal boundaries. However, as the aircraft enters takeoff and climb, engine temperatures rapidly increase and the FADEC may surpass thermal safety margins. Since the control processor board is monitoring flight phase, temp sensor, I/O board sensor/actuator values, and ARINC data values, it is able to detect the thermal issue. It can then send signals to perform frequency scaling on cores running data analysis and/or de-power the SoC's GPU. As the aircraft enters cruise, the input parameters to the control processor begin to regulate and thermal values decrease, causing the control processor to once again signal the PHM board to return to its normal power state by removing frequency scaling and activating power to the GPU.

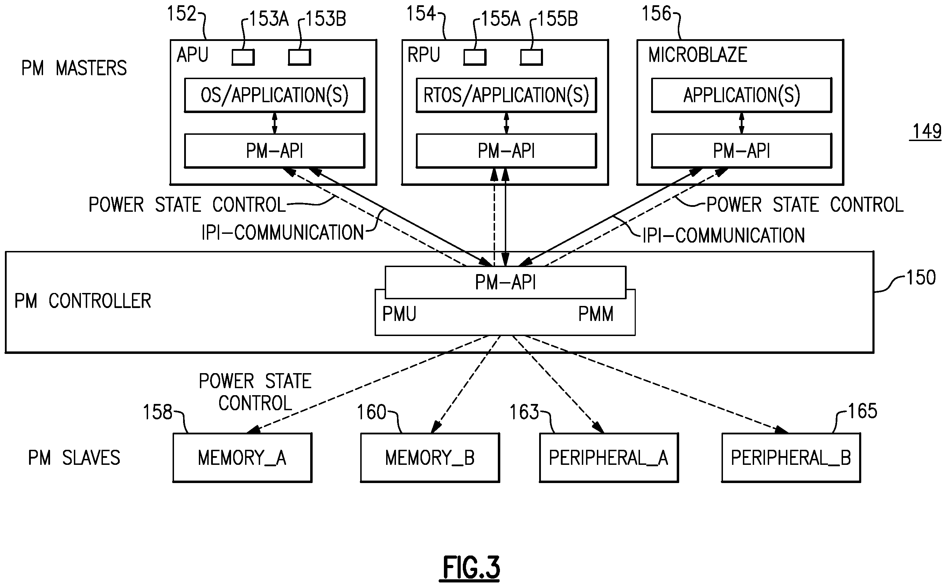

Figure 3 shows an SoC in a graphical representation.

The SoC includes a PM controller 150 which is tasked to control the power states of the full-power, low-power, and programmable logic power domains. There is an application processing unit ("APU") 152, real time processing unit ("RPU") 154 and programmable logic 156. The controller 150 will facilitate a method of power management according to this disclosure.

As shown schematically, APU 152 may have plural separate cores 153A and 153B. As mentioned above, there may actually be four cores. The RPU 154 may have separate cores 155A and 155B. The cores 153A/153B can all be treated as separate power islands such that any one of them may be controlled to reduce heat load while maintaining operation of the others. The cores 155A/155B can be treated as a single power island such that thermal mitigation controls will affect both cores. By organizing non-critical functions on a common one of the cores, the reduction of activity at that core to reduce temperature is facilitated.

The FADEC's control system software will continuously monitor the temperature of the three power domains using integrated temperature sensors as disclosed below. When thermal thresholds are being approached, or when the engine control desires to minimize thermal output based on other engines/aircraft parameters, the control system software would signal the PM controller 150 to minimize processing unit activities using methods such as core de-activation, core idling, clock dating or frequency scaling.

As shown, there are memories 158 and 160 associated with the controller 150, and peripherals 163 and 165 controlled by the controller 150.

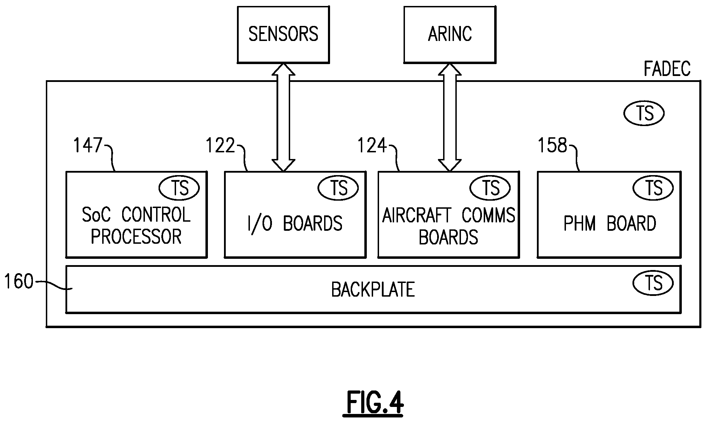

Figure 4 graphically shows the overall assembly, including a back plate 160 mounting the Control Processor Board 147. There are also input output boards, such as shown at 122 in Figure 2B, and aircraft communication boards 124 again as shown in Figure 2B. A PHM board 158 communicates with a plurality of sensors elsewhere on the engine. The "TS" element shown here are temperature sensors, which would each communicate back to the SoC 149 and in particular the controller 150.

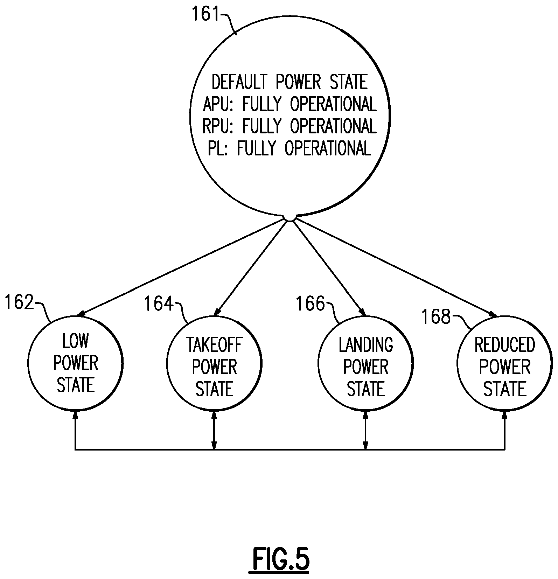

As shown in Figure 5, at 161, in a default state, the APU, the RPU and the programmable logic may all be fully operational. There is also a low power state 162, wherein all three elements may be fully operational. This might occur, say, when the associated aircraft and engine are preparing to power down.

There is a takeoff power state 164 wherein the critical functions may be fully operational, but the control may reduce operation of non-critical functions. The control may be programmed to do this automatically at takeoff, or it could be programmed to monitor temperature so as to command power reduction if the temperature approaches unsafe limits.

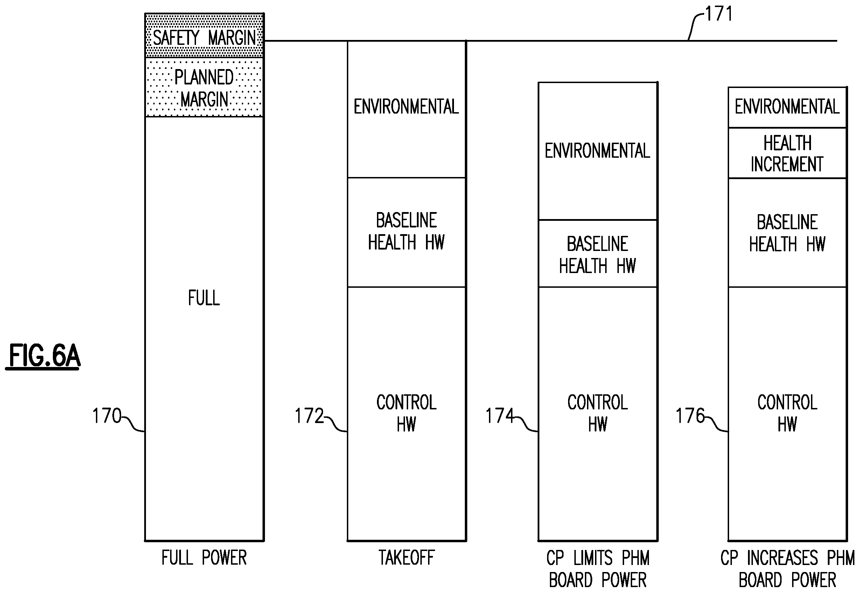

As an example, Figure 6A shows distinct types of control processing which may be utilized with a modern gas turbine engine. The graph illustrates a heat load on the FADEC. At 170, the full power state of regime 161 is illustrated, with a planned margin and a safety margin before one reaches a critical limit 171.

As shown at 172, at takeoff, there are critical control elements, baseline health controls, and environmental conditions contributing to the thermal load. As can be seen at takeoff, the combined full power of the modular FADEC 159 might then reach or exceed the limit 171. Thus, the control moves operation of the FADEC into regime 174. In another scenario, where environmental thermal load is minimal, the control moves operation of the FADEC into regime 176 by increasing operating capacity of baseline health controls.

As can be seen, the baseline health operation may be limited or increased, while still maintaining the critical control elements at full power. The operation can be reduced such as by frequency scaling, or simply turning off certain operations. As examples, modern gas turbine engines provide a variety of health monitoring and other diagnostic operation such as life limit monitoring. These non-critical functions can be reduced or stopped during higher power operations such as takeoff, and turned back on at lower power operation.

Returning to Figure 5, there is a landing power state 166 at which the limits on operation may be intermediate regime 162 and 164.

There is also a reduced power state 168. This could be activity in response to a sudden increase, such as an unexpected increase in temperature during an expected low power operation, say cruise. Again, the control would limit operations to reduce temperature.

This form of active thermal management could also be used when componentry is approaching its' estimated remaining useful life. By turning off functions/cores/etc. One may actively prolong the life of the componentry by placing the thermal/power controls in a "Reduced Mode" state.

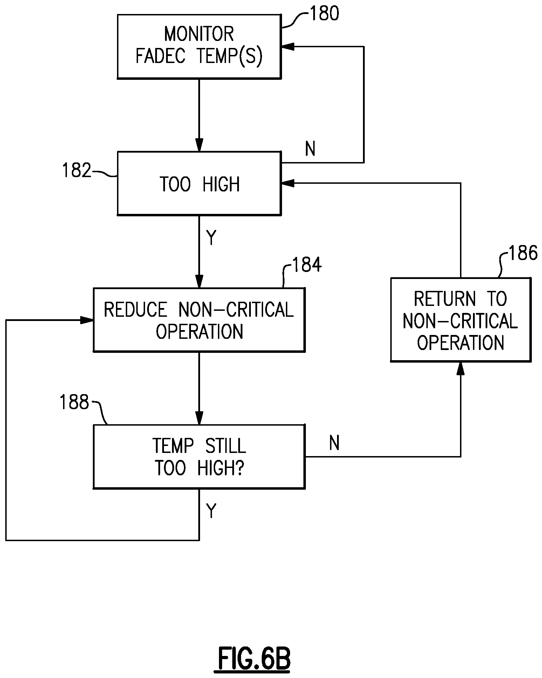

Figure 6B is a flow chart of how a control designed under this disclosure would operate. As shown, at step 180, the system monitors FADEC temperature. At step 182 it asks if that temperature is too high. If its not, it returns to step 180.

However, if the temperature is too high at step 182 the control reduces non-critical operation at step 184. Next, at step 188, the control again asks if the temperature is still too high. If yes, then it returns to step 184 and further reduces non-critical operation. However, if the temperature is not too high at step 188 then certain non-critical operations may be restated at step 186, and the method returns to step 182.

A method under this disclosure could be said to include operating a gas turbine engine associated with an aircraft with a full authority digital electronic controller including operating systems that are critical to operation of the gas turbine engine for the aircraft, and systems that are less critical. The temperature is monitored in the full authority digital electronic controller, and operation of the non-critical functions reduced based on the temperature of the full authority digital electronic controller approaching a limit.

An assembly under this disclosure could be said to include a full authority digital electronic controller having embedded processing circuitry operable to operate a gas turbine engine associated with an aircraft including operating systems that are critical to operation of the gas turbine engine for the aircraft, and systems that are less critical. The temperatures are monitored in the full authority digital electronic controller and the embedded processing circuitry operable to reduce operation of the non-critical functions based on the temperature of the full authority digital electronic controller approaching a limit.

A gas turbine engine under this disclosure could be said to include a compressor, combustor and a turbine. A full authority digital electronic controller has embedded processing circuitry operable to operate a gas turbine engine associated with an aircraft including operating systems that are critical to operation of the gas turbine engine for the aircraft, and systems that are less critical. The temperatures are monitored in the full authority digital electronic controller and the embedded processing circuitry operable to reduce operation of the non-critical functions based on the temperature of the full authority digital electronic controller approaching a limit.

Although embodiments have been disclosed, a worker of ordinary skill in this art would recognize that modifications would come within the scope of this disclosure. For that reason, the following claims should be studied to determine the true scope and content of this disclosure.

## Claims

1. A method comprising:
operating a gas turbine engine (20; 91) associated with an aircraft (90) with a full authority digital electronic controller ("FADEC") (100) including operating systems that are critical to operation of the gas turbine engine (20; 91) for the aircraft (90), and systems that are less critical;
monitoring the temperature in the FADEC (100), and reducing operation of the non-critical functions based upon the temperature of the FADEC (100) approaching a limit (171).

2. The method as set forth in claim 1, wherein the method includes monitoring a sensed temperature to perform the monitoring step.

3. The method as set forth in claim 1 or 2, wherein the method includes assuming the temperature might be approaching the limit (171) under certain conditions.

4. The method as set forth in any preceding claim, wherein a processor within the FADEC (100) includes a plurality of cores (153A, 153B, 155A, 155B), with at least one of the cores (153A, 153B, 155A, 155B) being utilized to perform the non-critical functions, and the at least one of the cores (153A, 153B, 155A, 155B) being the one controlled to reduce operation of the non-critical functions.

5. The method as set forth in any preceding claim, wherein the non-critical functions include environmental functions and health functions.

6. The method as set forth in any preceding claim, wherein the reduction of the non-critical functions includes turning off the non-critical functions.

7. The method as set forth in any preceding claim, wherein the reduction of the non-critical function includes reducing a clock frequency for the non-critical function to reduce the generated heat.

8. An assembly (90) comprising:
a full authority digital electronic controller ("FADEC") (100) having embedded processing circuitry (114) operable to operate a gas turbine engine (20; 91) associated with an aircraft (90) including operating systems that are critical to operation of the gas turbine engine (20; 91) for the aircraft (90), and systems that are less critical;
the embedded processing circuitry (114) also operable to monitor the temperatures in the FADEC (100), and reduce operation of the non-critical functions based on the temperature of the FADEC (100) approaching a limit (171).

9. The assembly (90) as set forth in claim 8, wherein the embedded processing circuitry (114) is operable to monitor sensed temperatures to perform the monitoring step.

10. The assembly (90) as set forth in claim 8 or 9, wherein the embedded processing circuitry (114) is operable to assume the temperature might be approaching the limit (171) under certain conditions.

11. The assembly (90) as set forth in claim 8, 9 or 10, wherein a processor within the full authority digital electronic controller (100) includes a plurality of cores (153A, 153B, 155A, 155B), with at least one of the cores being utilized to perform the non-critical functions, and the at least one of the cores being the one controlled to reduce operation of the non-critical functions.

12. The assembly (90) as set forth in any of claims 8 to 11, wherein the non-critical functions include environmental functions and health functions.

13. The assembly (90) as set forth in any of claims 8 to 12, wherein the reduction of the non-critical functions includes turning off the non-critical functions.

14. The assembly (90) as set forth in any of claims 8 to 13, wherein the reduction of the non-critical function includes reducing a clock frequency for the non-critical function to reduce the generated heat.

15. A gas turbine engine (20; 91) comprising:
a compressor (24);
a combustor (56);
a turbine (28); and
the assembly of any of claims 8 to 14.
